# EUROPEAN PATENT SPECIFICATION

(11) **EP 2 260 721 B1**
(45) Date of publication and mention of the grant of the patent: **31.08.2016**
(21) Application number: 09305469.0
(22) Date of filing: 20.05.2009
(51) Int. Cl.: A23L 5/00, A23L 29/238, A23L 27/00, A23L 27/30

(54) **Marshmallow-like aerated confectionery and method of preparation thereof**
Marshmallow-artige, mit Luft durchsetzte Süßware und Verfahren zu deren Herstellung
Confiserie aéré de type guimauve et son procédé de préparation

(43) Date of publication of application: 15.12.2010
(73) Proprietor: Rousselot B.V., 5691 NM Son (NL)
(72) Inventor: CAPDEPON, Claude, 84470, CHATEAUNEUF de GADAGNE (FR); STEVENS, Paul, 9042, GENT MENDONK (BE)
(74) Representative: Algemeen Octrooi- en Merkenbureau B.V.

(56) References cited:
- WO-A-00/53024
- WO-A-00/69275
- WO-A-2008/071797
- DE-A1- 4 436 362
- US-A- 4 714 620
- JOHNSON G C: "Nougat and marshmallow" MANUFACTURING CONFECTIONER, CHICAGO, IL, US, vol. 86, no. 6, 1 June 2006 (2006-06-01), pages 56-59, XP008093943 ISSN: 0163-4364
- ANONYMOUS: "Cheese flavored marshmallows"[Online] 3 August 2009 (2009-08-03), XP002546575 Retrieved from the Internet: URL:http://www.flickr.com/photos/yardsaleb loodbath/3785557391/> [retrieved on 2009-09-14]
- MARY ELIZABETH HALL: "Candy Making Revolutionized, Confectionery from vegetables" 1912, , XP002546579 ISBN: 05-48588-32-5 * page 110 - page 116 *
- ANONYMOUS: "Carte de réception 2009"[Online] 2009, XP002546576 Retrieved from the Internet: URL:http://www.chateau-apigne.fr/bibliothe que/file/Carte%20reception%202009(1).pdf?P HPSESSID=089c66c6fd78d8cb1a2cc9706a17dee3> [retrieved on 2009-09-14]
- ANONYMOUS: "Puff'n stuff"[Online] 3 February 2009 (2009-02-03), XP002546577 Retrieved from the Internet: URL:http://parentzing.wordpress.com/2009/0 2/03/puff-n-stuff-valentines-day-gift-idea -1/> [retrieved on 2009-09-14]
- ANONYMOUS: "La Nouba Sugar Free Marshmallows"[Online] 6 December 2007 (2007-12-06), XP002546578 Retrieved from the Internet: URL:http://www.lowcarbchocolates.com/lanou bamarsh.html> [retrieved on 2009-09-18]
- DATABASE GNPD [Online] MINTEL October 2004 ANONYMOUS: 'Sugar free marshmallow pumpkin' Database accession no. 10190254

## Description

The subject of the present invention is a marshmallow-like aerated confectionery, as well as its method of preparation, as defined by the claims.

Items of aerated confectionery are very popular foodstuffs. An example of aerated confectionery is the marshmallow. Marshmallows exist in different formats, The basic composition of marshmallows comprises water, a disaccharide such as sucrose, a monosaccharide such as dextrose or corn syrup, and gelatin. It is also possible to incorporate flavours and colouring agents into this basic composition.

To prepare marshmallows, the sugars are mixed with the water and are heated to form a syrup having a high solids content. The syrup is then mixed with an aqueous dispersion of a colloid, and then whipped to obtain the desired volume by means of an expanding step. The colloid customarily used is gelatin.

Up till now existing commercial marshmallows are sweet, neutral to slight acid confectionery products. Johnson GC (the manufacturing confectioner, June 2006, page 56), WO 00/53024, WO 2008/071797, WO 00/69275 and Mary Elizabeth Hall (candy making revolutionized, confectionery from vegetables) describe marshmallows comprising sugar and/or sugar syrup. XP 2546578 describes a sugar free and fat free marshmallow comprising polyols as bulking agent. These consumer products are categorized as sugar confectionery and dedicated to children and adults to have a "sweet" moment of indulgence. Due to the neutral pH and the presence of sugars (sucrose and corn syrup) of this product only flavours such as vanilla are really compatible with this type of confectionery product. This limits the consumer market for this type of application.

The aim of the present invention is to provide an item of marshmallow-type aerated confectionery without mono- or disaccharides.

The aim of the present invention is to provide an item of marshmallow-type aerated confectionery with savoury flavour.

The aim of the invention is to produce an item of marshmallow-type aerated confectionery which targets the snack market and broadens by this way the application field of marshmallows. The consumption of these savoury marshmallows will focus an adult population and be proposed as an alternative snack while drinking an aperitif or having a beer in a bar or while looking at television or going to the movie.

The present invention thus relates to a marshmallow-like aerated confectionery comprising a gelling agent and polydextrose.

The term "marshmallow" generally designates marsh mallow paste in the form of pastel-coloured cubes.

The name "marshmallow" and the nature of this confectionery come from a medicinal extract of the root of the Marsh Mallow (*althae officinalis*). Marshmallows are conventionally prepared by suspending in a sugar syrup a foam based in particular on colloidal matter.

The term "marshmallow-type aerated confectionery" usually designates a sweet or candy having a spongy, resilient consistency based on gelatin and sugar.

Then, the invention is based on the fact that the marshmallow of the invention is not sweetened and does not contain sugar (sucrose) or sugar syrup as usual marshmallows.

The term "gelling agent" designates a substance which is used to pass from a solution to a solid state. Said agent then results in the formation of a gel.

The term "bulking agent" designates non-nutritive or nutritive substances added to foods to increase the bulk and effecting or non-effecting satiety, which are especially used in foods designed for weight management.

In the present invention, the bulking agent is essentially non-sweetening and/or low sweetening. Fractions of standard sweeteners (sweetening power equal to sucrose/saccharose) can be used.

It should be mentioned here the following relative sweetness: sucrose/saccharose = 1, xylitol = 1, maltitol = 0.9, lactitol = 0.4, and polydextrose ≤ 0.1.

Preferably, this bulking agent is non-sweetening.

Preferably, the bulking agent is a sucrose and/or corn syrup substitute, in particular chosen from the group consisting of polyols and fibres.

Among the polyols, xylitol, maltitol, lactitol, and mixtures thereof are preferably used.

Preferably, the gelling agent is gelatin, or a combination of gelatin and other hydrocolloids such as pectin.

According to an advantageous embodiment, the gelatin has a bloom of 100 g to 350 g, especially 200 g to 300 g, and preferably 240 g to 260 g.

The gelling power of the gelatin is expressed as bloom value. The bloom (gel strength) is the maximum force measured during the penetration of a standardised cylinder 12.7 mm in diameter to a depth of 4 mm and at a speed of 0.5 to 1 mm/second into a 6.67% gel matured for 16 to 18 hours at 10°C in a specific flask (JAOAC 31, 511 (1948); 52, 401 (1969) and 53, 386 (1970)).

The bloom also makes it possible to determine the gelatinous stability of the gelatin. The higher the bloom, the higher the gelling power of the gelatin.

According to an advantageous embodiment, the gelatin has a viscosity of 2.5 mPa.s. to 5 mPa.s, especially 3.0 to 4.5 mPa.s, and preferably 3.6 to 4.1 mPa.s.

The viscosity of the gelatin is defined by its dynamic viscosity when it is tested as a 6.67 % solution in water at 60°C.

The viscosity of a 6.67% gelatin solution is determined at 60°C by measuring the flow time of 100 ml of the solution through a standard pipette.

The marshmallow of the invention has been developed combining preferably gelatine with bulking agents (sugar substitutes) with very low sweetness in a well defined recipe and processed under specific conditions on a continuous pressure beater.

According to a preferred embodiment, the marshmallow-like aerated confectionery of the invention comprises as bulking agent at least one polyol and at least one fibre (polydextrose), as well as the gelling agent, which is preferably gelatin.

Thus, a preferred marshmallow of the invention is a marshmallow containing gelatin, as well as a polyol chosen from the group consisting of: xylitol, maltitol, lactitol, and mixtures thereof, and a fibre chosen from the group consisting of: polydextrose, inuline, and mixtures thereof.

The present invention also relates to a marshmallow-like aerated confectionery as defined above, further comprising a salt, in particular chosen from the group consisting of: sodium chloride, potassium chloride, sodium glutamate, and mixtures thereof.

According to a most preferred embodiment, the marshmallow-like aerated confectionery of the invention are as defined above, and further comprise a savoury flavour, said savoury flavour being in particular chosen from the group consisting of: cheese, fish, vegetables, herbs, spices, meat and salting flavours, such as emmental, chilli, salmon, beacon, tomato, rosemary, and mixtures thereof.

The marshmallow-like aerated confectionery of the invention may also, if appropriate, comprise a colouring agent.

The marshmallow-like aerated confectionery of the invention does not comprise sucrose/saccharose.

Preferably, the marshmallow of the invention is fat free, sugar free and low calorie.

An advantageous embodiment of the marshmallow-like aerated confectionery of the invention comprises:
- from 2 to 6% by weight of gelling agent based on the total weight of the confectionery,
- up to 80% by weight of fibre based on the total weight of the confectionery,
- from 0 to 80% by weight of polyol based on the total weight of the confectionery,
- from 1 to 5% by weight of salt based on the total weight of the confectionery.

According to an advantageous embodiment, the marshmallow-like aerated confectionery according to invention has a density from 0.2 to 0.8.

Preferably, the composition of the marshmallow-type aerated confectionery of the invention does not include starch. In fact, within the framework of the invention, starch is used only for the shaping of the marshmallows at the end of the preparation process, i.e. for the packaging of the marshmallows. Thus, starch does not form part of the internal composition of the marshmallows.

The present invention also relates to a method of preparation of a marshmallow-like aerated confectionery as defined above, comprising the following steps:
a) a step of dissolving in water the gelling agent,
b) a step of dissolving in water the bulking agent, and if appropriate the salt as defined above, such as sodium chloride, potassium chloride, sodium glutamate, and mixtures thereof,
c) a step of mixing the mixtures as obtained in steps a) and b),
d) if necessary a step of adding a savoury flavour to the mixture of step c), to obtain an homogeneous mass, and
e) a step of producing the marshmallow-like aerated confectionery from said homogeneous mass.

According to an advantageous embodiment, the water of step a) is hot water at a temperature of from 40 °C to 100 °C, preferably 80 to 90 °C.

Preferably, the mixture of step a) is maintained for at least 10 minutes, preferably 30 minutes, at a temperature of at least 40 °C, preferably 60°C.

According to a preferred embodiment, the mixture of step b) is cooked at a temperature sufficient to obtain a final total soluble solid content of the finished product (marshmallow) of at least 78%, preferably 82%.

Preferably, said cooked mixture is allowed to cool down at a temperature of not below 40 °C, preferably 60°C.

If necessary, the method of the invention may also comprise a step of agitating, which follows step d), so as to obtain a homogeneous mass, which is then transferred to the hopper of a continuous pressure beater.

According to a preferred embodiment, the method of the invention comprises a final step of extrusion.

The present invention also relates to a marshmallow-like aerated confectionery as obtained according to the method as defined above.

### EXAMPLES

### EXAMPLE 1

### Description of the ingredients

### Gelatin (gelling agent)

The gelatin used is Rousselot^{®} 5000 ACP gelatin. It is an acid process gelatin extracted from pig skin for edible applications. It has a constant foam capacity and foam stability.

It has the following characteristics:

| | |
|---|---|
| Gel strength (bloom) | 240 - 260 g |
| Viscosity | 3.6 - 4.1 mPa.s |
| pH | 4.5 - 5.5 |

### Polydextrose (fibre)

The polydextrose is Litesse^{®} ULTRA^{™} (IP grade) of DANISCO (white powder).

This powder is a sorbitol-terminated, randomly bonded condensation polymer of D-glucose with some bound sorbitol and a suitable acid.

It is very soluble in water (approximately 80 g/100 mL at 20°C).

### Xylitol (polyol)

The xylitol used in the invention is Xylitol C from DANISCO.

It is a white crystalline powder with a mean particle size range of 0.4-0.6 mm.

It is very soluble in water (approximately 1.6 g/mL at 20 °C).

### Monosodium L-glutamate (salt)

This salt is obtained from AJINOMOTO (Ajinomoto Foods Europe). It is also called E621.

The protocols described below make it possible to obtain 100 kg of finished product.

### Preparation of extruded marshmallows

4 kg of gelatin (5000 ACP) are dissolved into 8 kg of water to obtain a mixture (a). This mixture (a) is dissolved in hot water (80-90 °C) and maintained for 30 minutes at 60°C.

A mixture (b) is prepared by mixing: 67.5 kg of polydextrose, 9 kg of xylitol, 2 kg of NaCl, 0.3 kg of Na glutamate, and 26 kg of water.

This mixture (b) is cooked in an open vessel to a temperature of 110°C. Then, it is allowed to cool down to 100°C.

The mixtures (a) and (b) are then mixed and allowed to cool down to 60 °C.

The following step consisted of adding the colouring agent(s) and the flavours and of agitating the whole until a homogeneous mass was obtained. Finally, the total mass obtained was transferred into the hopper of the continuous pressure beater (Mondomix type).

The equipment used has the following parameters:
- inlet pressure: 7 bars
- pressure mixing head: 2.4-3 bars (end/beginning)
- counter pressure: 2.6-2.8 bars (end/beginning)
- speed inlet pump: 30 rpm
- speed mixing head: 600-1200 rpm (end/beginning)
- air pressure: 25-57 mm (end/beginning)
- temperature inlet: 72-82 °C (end/beginning)
- temperature outlet: 21-57 °C (end/beginning)
- temperature double wall (cold): 20 °C
- temperature double wall (warm): 80 °C
- density of extruded mass: 0.22-0.26

### Packaging of the extruded marshmallow

After extrusion, the rope is stored at ambient temperature (20 to 25°C) for 2 hours.

The rope is then cut and rolled in starch.

The samples are then packed in plastic bags and stored at ambient temperature (20 to 25°C).

### EXAMPLES 2 TO 13

The following table describes various preparations of marshmallows according to the invention. The preparation method is the same as the one described above for example 1.

The marshmallows of examples 2 to 13 are obtained with various gelling agents, polyols, fibres, salts and flavours as indicated in the following table:

| **Example** | **Gelling agent** | **Fiber** | **Polyol** | **Salt** | **Flavor** |
|---|---|---|---|---|---|
| **2** | 250 Pig Skin gelatine | polydextrose | xylitol | NaCl+Na glutamate | emmental |
| **3** | 250 Pig Skin gelatine | polydextrose | xylitol | NaCl+Na glutamate | chilli |
| **4** | 250 Pig Skin gelatine | polydextrose | xylitol | NaCl+Na glutamate | goat cheese+pepper |
| **5** | 250 Pig Skin gelatine | polydextrose | lactitol | NaCl+Na glutamate | crispy pore |
| **6** | 250 Pig Skin gelatine | polydextrose | | NaCl+Na glutamate | goat cheese |
| **7** | 200 Lime Pig Bone gelatine+Pectine | polydextrose | lactitol | NaCl+Na glutamate | goat cheese |
| **8** | 200 Lime Pig Bone gelatine+Pectine | polydextrose | lactitol | NaCl+Na glutamate | crispy porc |
| **9** | 200 LimeBovine Bone gelatine+Pectine | polydextrose | lactitol | NaCl+Na glutamate | crispy porc |
| **10** | 200 LimeBovine Bone gelatine+Pectine | polydextrose | lactitol | NaCl+Na glutamate | smoked salmon |
| **11** | 200 LimeBovine Bone gelatine+Pectine | polydextrose | lactitol | NaCl+Na glutamate | peanut |
| **12** | 200 LimeBovine Bone gelatine+Pectine | polydextrose | lactitol | sub4salt^{®} | peanut |
| **13** | 200 LimeBovine Bone gelatine+Pectine | polydextrose | lactitol | sub4salt^{®} | red pepper |

| | | | | | |
|---|---|---|---|---|---|
| 'sub4salt^{®}' is a product from Jungbunzlauer, comprising sodium and potassium chloride as well as other additives, (it allows to reduce the content of sodium from 30 to 35%) The gelatines mentioned above are obtained from Rousselot. The pectine is Amid CS 025-A from Herbstreith & Fox (H&F). The lactitol is from Danisco. | | | | | |

## Claims

1. Savoury marshmallow-like aerated confectionery free of mono- and disaccharides, comprising a gelling agent and polydextrose.

2. The marshmallow-like aerated confectionery according to claim 1, wherein the gelling agent is gelatin, or a combination of gelatin and other hydrocolloids.

3. The marshmallow-like aerated confectionery according to any of claims 1 to 2, comprising at least one polyol, said polyol being preferably chosen from the group consisting of: xylitol, maltitol, lactitol, and mixtures thereof.

4. The marshmallow-like aerated confectionery according to any of claims 1 to 3, further comprising a salt, in particular chosen from the group consisting of: sodium chloride, potassium chloride, sodium glutamate, and mixtures thereof.

5. The marshmallow-like aerated confectionery according to any of claims 1 to 4, further comprising a savoury flavour, said savoury flavour being in particular chosen from the group consisting of: cheese, fish, vegetables, herbs, spices, meat and salting flavours, such as emmental, chilli, salmon, beacon, tomato, rosemary, and mixtures thereof.

6. The marshmallow-like aerated confectionery according to any of claims 1 to 5, **characterized in that** it comprises:
- from 2 to 6% by weight of gelling agent based on the total weight of the confectionery,
- up to 80% by weight of polydextrose based on the total weight of the confectionery,
- from 0 to 80% by weight of polyol based on the total weight of the confectionery,
- from 1 to 5% by weight of salt based on the total weight of the confectionery.

7. The marshmallow-like aerated confectionery according to any of claims 1 to 6, **characterized in that** it has a density from 0.2 to 0.8.

8. A method of preparation of a marshmallow-like aerated confectionery according to any of claims 1 to 7, comprising the following steps:
a) a step of dissolving in water the gelling agent,
b) a step of dissolving in water polydextrose, and if appropriate the salt such as defined in claim 4,
c) a step of mixing the mixtures as obtained in steps a) and b),
d) if necessary a step of adding a savoury flavour to the mixture of step c), to obtain an homogeneous mass, and
e) a step of producing the marshmallaw-like aerated confectionery from said homogeneous mass.

9. The method of claim 8, wherein the water of step a) is hot water at a temperature of from 40 °C to 100 °C, preferably 80 to 90 °C.

10. The method of claim 8 or 9, wherein the mixture of step a) is maintained for at least 10 minutes, preferably 30 minutes, at a temperature of at least 40 °C, preferably 60 °C.

11. The method of any of claims 8 to 10, wherein step d) is followed by a step of agitating so as to obtain a homogeneous mass, which is then transferred to the hopper of a continuous pressure beater.

12. The method of any of claims 8 to 11, **characterized in that** it comprises a final step of extrusion.

13. A marshmallow-like aerated confectionery as obtained according to the method as defined in any one of claims 8 to 12.

## Patentansprüche

1. Herzhafte, marshmallow-artige Schaumzuckerware, die frei von Mono- und Disacchariden ist, umfassend ein Geliermittel und Polydextrose.

2. Marshmallow-artige Schaumzuckerware nach Anspruch 1, wobei das Geliermittel Gelatine oder eine Kombination von Gelatine und anderen Hydrokolloiden ist.

3. Marshmallow-artige Schaumzuckerware nach einem der Ansprüche 1 bis 2, die mindestens ein Polyol umfasst, wobei das Polyol vorzugsweise aus der Gruppe bestehend aus: Xylitol, Maltitol, Lactitol und Mischungen davon ausgewählt ist.

4. Marshmallow-artige Schaumzuckerware nach einem der Ansprüche 1 bis 3, die weiterhin ein Salz umfasst, insbesondere ausgewählt aus der Gruppe bestehend aus: Natriumchlorid, Kaliumchlorid, Natriumglutamat und Mischungen davon.

5. Marshmallow-artige Schaumzuckerware nach einem der Ansprüche 1 bis 4, die weiterhin ein herzhaftes Aroma umfasst, wobei das herzhafte Aroma insbesondere aus der Gruppe bestehend aus: Käse, Fisch, Gemüse, Kräutern, Gewürzen, Fleisch und salzenden Aromen wie Emmentaler, Chili, Lachs, Speck, Tomate, Rosmarin und Mischungen davon ausgewählt ist.

6. Marshmallow-artige Schaumzuckerware nach einem der Ansprüche 1 bis 5, **dadurch gekennzeichnet, dass** sie Folgendes umfasst:
- 2 bis 6 Gew.-% Geliermittel, bezogen auf das Gesamtgewicht der Zuckerware,
- bis zu 80 Gew.-% Polydextrose, bezogen auf das Gesamtgewicht der Zuckerware,
- 0 bis 80 Gew.-% Polyol, bezogen auf das Gesamtgewicht der Zuckerware,
- 1 bis 5 Gew.-% Polyol, bezogen auf das Gesamtgewicht der Zuckerware.

7. Marshmallow-artige Schaumzuckerware nach einem der Ansprüche 1 bis 6, **dadurch gekennzeichnet, dass** sie eine Dichte von 0,2 bis 0,8 aufweist.

8. Verfahren zur Herstellung einer marshmallow-artigen Schaumzuckerware nach einem der Ansprüche 1 bis 7, das folgende Schritte umfasst:
a) einen Schritt des Lösens des Geliermittels in Wasser,
b) einen Schritt des Lösens der Polydextrose und wahlweise des Salzes gemäß Definition in Anspruch 4 in Wasser,
c) einen Schritt des Mischens der Mischungen wie in den Schritten a) und b) erhalten,
d) bei Bedarf einen Schritt des Zusetzens eines herzhaften Aromas zu der Mischung von Schritt c), um eine homogene Masse zu erhalten, und
e) einen Schritt der Herstellung der marshmallow-artigen Schaumzuckerware aus der homogenen Masse.

9. Verfahren nach Anspruch 8, wobei das Wasser von Schritt a) heißes Wasser einer Temperatur von 40 °C bis 100 °C, vorzugsweise 80 bis 90 °C ist.

10. Verfahren nach Anspruch 8 oder 9, wobei die Mischung von Schritt a) mindestens 10 Minuten, vorzugweise 30 Minuten, bei einer Temperatur von mindestens 40 °C, vorzugsweise 60°C gehalten wird.

11. Verfahren nach einem der Ansprüche 8 bis 10, wobei nach Schritt d) ein Schritt des Rührens erfolgt, so dass eine homogene Masse erzeugt wird, die dann in den Trichter einer mit kontinuierlichem Druck arbeitenden Aufschlagvorrichtung überführt wird.

12. Verfahren nach einem der Ansprüche 8 bis 11, **dadurch gekennzeichnet, dass** es einen abschließenden Extrusionsschritt umfasst.

13. Marshmallow-artige Schaumzuckerware, wie nach dem in einem der Ansprüche 8 bis 12 definierten Verfahren erhalten.

## Revendications

1. Confiserie aérée de type guimauve salée exempte de mono- et disaccharides, comprenant un agent gélifiant et un polydextrose.

2. Confiserie aérée de type guimauve selon la revendication 1, dans laquelle l'agent gélifiant est la gélatine, ou une combinaison de gélatine et d'autres hydrocolloïdes.

3. Confiserie aérée de type guimauve selon l'une des revendications 1 et 2, comprenant au moins un polyol, ledit polyol étant de préférence choisi dans le groupe constitué : de xylitol, de maltitol, de lactitol, et de mélanges de ceux-ci.

4. Confiserie aérée de type guimauve selon l'une des revendications 1 à 3, comprenant en outre un sel, notamment choisi dans le groupe constitué : de chlorure de sodium, de chlorure de potassium, de glutamate de sodium, et de mélanges de ceux-ci.

5. Confiserie aérée de type guimauve selon l'une des revendications 1 à 4, comprenant en outre un goût salé, ledit goût salé étant notamment choisi dans le groupe constitué : de goûts de fromage, de poisson, de légumes, de fines herbes, d'épices, de viande et de salage, tels que l'emmental, le chili, le saumon, le bacon, la tomate, le romarin, et des mélanges de ceux-ci.

6. Confiserie aérée de type guimauve selon l'une des revendications 1 à 5, **caractérisée en ce qu'**elle comprend :
- de 2 à 6% en poids d'agent gélifiant par rapport au poids total de la confiserie,
- jusqu'à 80% en poids de polydextrose par rapport au poids total de la confiserie,
- de 0 à 80% en poids de polyol par rapport au poids total de la confiserie,
- de 1 à 5% en poids de sel par rapport au poids total de la confiserie.

7. Confiserie aérée de type guimauve selon l'une des revendications 1 à 6, **caractérisée en ce qu'**elle présente une densité allant de 0,2 à 0,8.

8. Procédé de préparation d'une confiserie aérée de type guimauve selon l'une des revendications 1 à 7, comprenant les étapes suivantes :
a) une étape qui consiste à dissoudre dans l'eau l'agent gélifiant,
b) une étape qui consiste à dissoudre dans l'eau le polydextrose et, le cas échéant, le sel tel que défini dans la revendication 4,
c) une étape qui consiste à mélanger les mélanges tels qu'obtenus dans les étapes a) et b),
d) si nécessaire, une étape qui consiste à ajouter un goût salé au mélange de l'étape c), pour obtenir une masse homogène, et
e) une étape qui consiste à produire la confiserie aérée de type guimauve à partir de ladite masse homogène.

9. Procédé de la revendication 8, dans lequel l'eau de l'étape a) est de l'eau chaude à une température allant de 40°C à 100°C, de préférence allant de 80 à 90°C.

10. Procédé de la revendication 8 ou 9, dans lequel le mélange de l'étape a) est maintenu pendant au moins 10 minutes, de préférence 30 minutes, à une température d'au moins 40°C, de préférence de 60°C.

11. Procédé de l'une des revendications 8 à 10, dans lequel l'étape d) est suivie d'une étape d'agitation afin d'obtenir une masse homogène, qui est ensuite transférée à la trémie d'un batteur sous pression continue.

12. Procédé de l'une des revendications 8 à 11, **caractérisé en ce qu'**il comprend une étape finale d'extrusion.

13. Confiserie aérée de type guimauve telle qu'obtenue selon le procédé tel que défini dans l'une quelconque des revendications 8 à 12.
